# FASCICULE DE BREVET EUROPEEN

(11) **EP 2 550 150 B1**
(45) Date de publication et mention de la délivrance du brevet: **26.08.2015**
(21) Numéro de dépôt: 11712978.3
(22) Date de dépôt: 09.03.2011
(51) Int. Cl.: B29C 65/16, B23K 26/06

(54) **APPAREIL DE SOUDAGE PAR LASER DE MEMBRANES THERMOPLASTIQUES**
VORRICHTUNG ZUM SCHWEISSEN VON THERMOPLASTISCHEN MEMBRANEN
DEVICE FOR WELDING THERMOPLASTIC MEMBRANES

(30) Priorité: 24.03.2010 FR 1052111
(43) Date de publication de la demande: 30.01.2013
(73) Titulaire: Plasticell, 63100 Clermont-Ferrand (FR); Innoptics, 33405 Talence (FR)
(72) Inventeur: LE MONNIER, Marc, F-63100 Clermont-Ferrand (FR); DENET, Stéphane, F-33600 Pessac (FR); LECOCQ, Vincent, F- 33400 TALENCE (FR)
(86) Numéro de dépôt international: PCT/FR2011/050479
(87) Numéro de publication internationale: WO 2011/117504

(56) Documents cités:
- EP-A2- 2 087 989
- DE-A1- 19 964 339
- US-A1- 2002 008 089

## Description

L'invention concerne un appareil de soudage par laser de membranes thermoplastiques.

Dans le cadre de la présente invention, on entend par « matière thermoplastique absorbante » une matière thermoplastique qui absorbe un rayonnement électromagnétique de longueur d'onde comprise entre 800 et 1200 nanomètres. Les thermoplastiques non chargés sont transparents au rayonnement électromagnétique à une longueur d'onde comprise entre 800 et 1200 nanomètres. Cependant, l'ajout d'une charge absorbante, telle que du noir de carbone, et ne serait-ce qu'à une faible quantité (0,5% en masse par exemple dans le cas du noir de carbone), les rend absorbants. Ainsi, on entend dans le cadre de la présente invention par « charge absorbante » un matériau qui, de par son ajout à une matière thermoplastique, rend celle-ci absorbante à un rayonnement électromagnétique de longueur d'onde comprise entre 800 et 1200 nanomètres.

De plus, on définit de la manière suivante un éclairement uniforme d'une surface supérieure à 10 millimètres carrés. Soit une surface élémentaire de 1 millimètre carré. L'éclairement est dit uniforme sur la surface supérieure à 10 millimètres carrés si l'écart entre la puissance optique moyenne reçue par cette surface supérieure à 10 millimètres carrés et la puissance reçue par n'importe laquelle de ses surfaces élémentaires n'excède pas 10 %.

On définit un éclairement simultané d'une surface de par le fait qu'à un instant donné tous les points de ladite surface sont éclairés.

On entend par éclairement direct au moyen de diodes laser un éclairement pour lequel la puissance optique n'a pas été guidée par une fibre optique.

Pour assurer l'étanchéité de divers ouvrages tels que des bassins de rétention d'eau, des bassins de pisciculture, des fosses d'enfouissement des déchets, des parois de tunnels, des toits d'immeubles, ou encore de dalles avant la pose de revêtements de sol, on a recours à des membranes thermoplastiques, à savoir en des polymères tels que le polyéthylène haute densité (PEHD), le polychlorure de vinyle souple (PVC-P) ou encore le polypropylène (PP).

Ces membranes thermoplastiques se présentent généralement sous la forme de feuilles en rouleau, dont la largeur est insuffisante pour couvrir toute la surface à étanchéifier. C'est pourquoi, à partir de ces rouleaux, on découpe des membranes thermoplastiques que l'on dispose sur la surface à étanchéifier en parallèle de manière à ce qu'elles se recouvrent sur une largeur de 80 à 500 mm selon les dimensions de l'ouvrage, et on assure l'étanchéité du recouvrement par un soudage à chaud.

A ce jour, les procédés suivants sont connus pour réaliser la soudure au niveau de la zone de recouvrement de membranes thermoplastiques:
Le premier procédé consiste à insérer un sabot chauffé électriquement entre les deux membranes thermoplastiques à assembler, de façon à ramollir suffisamment leur surface pour que la pression exercée ensuite par un galet en métal placé derrière le sabot et en appui sur la membrane thermoplastique dite supérieure provoque leur adhésion. Néanmoins, ce procédé ne convient pas pour une membrane thermoplastique d'épaisseur inférieure à 500 microns. De plus, la vitesse maximale de soudage ne peut excéder 5 mètres par minute.
Le second procédé consiste à insérer entre les membranes d'étanchéité, à la place du sabot chauffant, une buse aplatie au travers de laquelle on souffle de l'air à une température comprise entre 250 et 400°C. Il devient alors possible de souder des membranes thermoplastiques plus minces, mais les appareils les plus performants utilisés pour ce second procédé ne dépassent pas la vitesse de 7,5 mètres par minute, soit seulement 450 mètres par heure. Cela est très pénalisant, puisque tant que l'étanchéité du sol ou des parois n'a pas été entièrement achevée, les étapes suivantes de la construction ne peuvent pas démarrer.

Les appareils de soudage utilisés pour réaliser les procédés décrits ci-dessus présentent en outre les inconvénients suivants :
- L'écrasement des membranes thermoplastiques ramollies est réalisé par un galet métallique lisse dont la largeur est d'environ 50 mm. Un défaut de planéité provoqué par un corps dur affleurant (un caillou par exemple) induira un défaut de soudure ponctuel.
- Une fois ce défaut de soudure constaté, il n'est pas possible de réintroduire l'élément chauffant entre les deux membranes thermoplastiques pour le corriger. Il faut alors agir de l'extérieur avec un autre appareil à air chaud.
- L'appareil de soudage doit en permanence rester calé sur la tranche de la membrane thermoplastique supérieure, ce qui demande une surveillance de chaque instant. Cela exclut aussi de travailler de nuit.
- Le déplacement de l'appareil de soudage doit s'effectuer à vitesse constante, car le moyen de chauffe n'est pas capable de s'adapter immédiatement à un écart de vitesse. C'est pourquoi, en pratique, la plupart de ces appareils de soudage sont autotractés et programmés pour maintenir une vitesse constante.
- Le rendement énergétique de ces appareils de soudage n'est pas élevé, car dans le cas où l'appareil de soudage comporte un sabot en acier, ce dernier est trop mince pour qu'on puisse y introduire une résistance électrique chauffante. C'est pourquoi, la résistance électrique est généralement insérée dans l'embase verticale sur laquelle est vissé le sabot. L'acier étant un médiocre conducteur de la chaleur, la perte énergétique est importante. De plus, le dispositif de soufflage d'air chaud ne transfère lui aussi qu'une petite fraction de l'énergie qu'il consomme aux zones de membrane thermoplastique plastique à souder ensemble. Ainsi, la consommation électrique de ces appareils de soudage connus de l'état de l'art peut être comprise entre 1500 et 5000 W en fonction de la vitesse de soudage, ce qui nécessite un câble d'alimentation relié à un groupe électrogène.
- Enfin, une maintenance de ces appareils de soudage est également à prévoir, car les matières thermoplastiques dont sont constituées les membranes à souder peuvent se déposer sur le sabot ou la buse lorsqu'elles sont très ramollies.

Il est par ailleurs aussi connu de réaliser des soudures de matières thermoplastiques au moyen d'appareils de soudage qui sont équipés de diodes laser et de fibres optiques qui canalisent la lumière émise par lesdites diodes laser de manière à la transporter jusqu'aux membranes thermoplastiques à souder. Néanmoins, le fait d'introduire la lumière dans une fibre optique est une opération coûteuse qui requiert des optiques et des alignements précis entre la source de lumière et la fibre optique, ce qui génère inévitablement des pertes de puissance. Le brevet US 2002/0008089 A1 décrit l'utilisation de guide d'ondes afin d'uniformiser la radiation laser.

La présente invention remédie tout ou en partie aux inconvénients détaillés ci-dessus que présentent les appareils de soudage de membranes thermoplastiques actuellement connus.

En effet, la présente invention se propose de fournir un appareil de soudage de membranes thermoplastiques permettant :
- l'obtention d'une soudure étanche et continue, et ce même si le sol ou le support n'est pas lisse,
- le cas échéant, la réparation des défauts ponctuels de soudure,

De plus, avec un appareil de soudage selon l'invention, il n'est plus indispensable au cours du soudage :
- de suivre précisément le bord de la membrane thermoplastique supérieure,
- de maintenir une vitesse constante et lente,

Enfin, l'appareil de soudage selon l'invention ne nécessite pas de fréquents nettoyages tels qu'évoqués ci-dessus, et surtout, il est de conception simple, à savoir qu'il ne nécessite pas d'optiques particulières et complexes.

L'appareil de soudage selon les revendications d'une première membrane thermoplastique sur une deuxième membrane thermoplastique, au moins la première membrane thermoplastique ou la deuxième membrane thermoplastique étant absorbante comprend au moins une matrice comportant une pluralité de diodes laser destinées à émettre un faisceau laser F formant un éclairement direct, simultané et uniforme sur la surface d'éclairement de ladite première membrane thermoplastique.

Ainsi, grâce à la pluralité de diodes laser destinées à émettre un faisceau laser F formant un éclairement direct, simultané et uniforme que comporte l'appareil de soudage selon l'invention, on peut de plus s'abstenir d'avoir recours à un ou plusieurs miroirs mobiles, coûteux et fragiles, dont on doit en plus asservir la position pour effectuer le balayage dans une ou deux dimensions, de manière à générer une densité de puissance uniforme lorsqu'on la moyenne dans le temps.

La conception de l'appareil de soudage selon l'invention s'en trouve simplifiée et gagne en robustesse, car il n'y a aucun élément en mouvement, et la transmission de l'énergie aux membranes thermoplastiques à souder est optimale.

De plus, grâce à cet éclairement uniforme, direct et simultané, il n'est pas nécessaire qu'une fibre optique canalise la lumière émise par les diodes laser et la transporte jusqu'aux dites membranes thermoplastiques à souder, ce qui contribue aussi à simplifier la conception de l'appareil de soudage selon l'invention.

Avantageusement, l'appareil de soudage comprend en outre au moins un guide d'onde.

Dans un mode de réalisation de l'invention, l'appareil de soudage comprend en outre au moins un moyen de mise en contact de la première membrane thermoplastique sur la deuxième membrane thermoplastique. Ce moyen de mise en contact est conçu de manière à exercer une pression suffisante au niveau de la surface d'éclairement par le faisceau laser F pour que les première et deuxième membranes thermoplastiques puissent échanger des calories par conduction.

Préférentiellement, l'appareil de soudage comprend en outre au moins un moyen de drainage calorique destiné à éviter la dégradation par chaleur de la surface d'éclairement de la première membrane thermoplastique. Ledit moyen de drainage calorique possède une effusivité très supérieure à celle du polymère thermoplastique dont est constituée la première membrane thermoplastique, ce qui lui permet de drainer les calories générées par l'irradiation laser hors de la surface supérieure de la première membrane thermoplastique.

De préférence, lesdites diodes laser émettent chacune un rayon laser à une longueur d'onde comprise entre 800 et 1200 nm.

Avantageusement, les diodes laser sont des diodes laser qui émettent chacune un rayon laser perpendiculairement au substrat dont elles sont constituées.

Les diodes laser sont des diodes laser de type VCSEL (« Vertical Cavity Surface Emitting Laser » traduit par « laser à cavité verticale émettant par la surface »).

Avantageusement, l'appareil de soudage comprend une pluralité de guides d'onde et une pluralité de matrices agencés de manière à ce qu'au moins un desdits guides d'onde guide au moins un desdits faisceaux laser F émis par la pluralité des diodes laser de ladite pluralité de matrices.

Dans un mode de réalisation de l'invention, l'appareil de soudage comprend une pluralité de guides d'onde et une pluralité de matrices agencés de manière à ce que chaque guide d'onde guide un faisceau laser F émis par la pluralité des diodes laser d'une matrice correspondante.

Avantageusement, le moyen de drainage calorique est intercalé entre le faisceau laser F et la première membrane thermoplastique et a un coefficient de conductivité thermique λ très supérieur à celui de la première membrane thermoplastique. De préférence, ce coefficient de conductivité thermique λ est supérieur à 30 W/m.K à 20°C.

Avantageusement, l'appareil de soudage comprend au moins un barreau de saphir synthétique ou de diamant synthétique. Le guide d'onde, le moyen de mise en contact de la première membrane thermoplastique sur la deuxième membrane thermoplastique et le moyen de drainage calorique destiné à éviter la dégradation par chaleur de la surface d'éclairement de la première membrane thermoplastique peuvent être cumulés en un tel barreau de saphir synthétique ou de diamant synthétique. Cela présente l'avantage de simplifier l'appareil de soudage selon l'invention.

Dans un mode de réalisation, l'appareil de soudage peut comprendre au moins une plaque de matériau transparent qui remplit les fonctions de moyen de drainage calorique et de moyen de mise en contact de la première membrane thermoplastique sur la deuxième membrane thermoplastique. De préférence, la plaque de matériau transparent est une plaque de saphir synthétique ou de diamant synthétique.

Dans un mode de réalisation où l'appareil de soudage comprend une telle plaque de saphir synthétique ou de diamant synthétique, l'appareil de soudage peut aussi comprendre un barreau de verre qui remplit la fonction de guide d'onde.

Ces modes de réalisation ainsi décrits présentent les avantages de simplifier la conception de l'appareil de soudage selon l'invention.

Préférentiellement, le guide d'onde comprend au moins un dioptre en forme d'encoche.

De manière préférée, l'appareil selon l'invention comprend au moins un moyen de mise en contact de la première membrane thermoplastique sur la deuxième membrane thermoplastique qui comporte des éléments de déformation élastique.

Avantageusement, l'appareil de soudage selon l'invention comporte une source d'alimentation qui est une source d'énergie de type batterie.

L'appareil de soudage selon l'invention peut comprendre des moyens de déplacement lui permettant d'être déplacé pendant le soudage.

L'appareil de soudage selon l'invention peut en outre comprendre un moyen permettant à la chaleur produite dans la première membrane thermoplastique de se propager dans la deuxième membrane thermoplastique. Avantageusement, ce moyen est un patin en Téflon®.

De manière préférentielle, la puissance émise par le faisceau laser F est fonction de la vitesse de soudage de l'appareil de soudage.

Avantageusement, le faisceau laser F est réalisé sur plusieurs lignes.

Dans un mode de réalisation, l'appareil de soudage comprend en outre au moins un système optique conçu de manière à ce que l'éclairement direct, simultané et uniforme formé par le faisceau laser F émis par la pluralité de diodes laser se trouve dans le plan focal objet de manière à obtenir un agrandissement pour étaler la puissance du faisceau laser F dans le plan image.

Avantageusement, le système optique comprend en outre au moins deux miroirs disposés de part et d'autre du faisceau laser F de manière à contenir sa puissance optique selon une direction transverse au déplacement de l'appareil de soudage et à l'étaler dans la direction du sens de déplacement dudit appareil de soudage. Lesdits au moins deux miroirs peuvent avoir un écartement réglable.

Dans un mode de réalisation de l'invention, lesdits au moins deux miroirs remplissent la fonction de moyen de mise en contact de la première membrane thermoplastique sur la deuxième membrane thermoplastique.

De manière préférée, ledit système optique comprend au moins une lentille.

Dans un mode de réalisation de l'invention, l'appareil de soudage comprend en outre au moins un moyen d'écrasement de la première membrane thermoplastique sur la deuxième membrane thermoplastique. Ce moyen d'écrasement permet un écrasement des première et deuxième membranes thermoplastiques au niveau des zones ramollies par la chaleur de façon à provoquer une interpénétration de matière entre ces membranes thermoplastiques.

L'invention sera mieux comprise à l'aide de la description détaillée qui est exposée ci-dessous au regard du dessin annexé représentant, à titre d'exemple non limitatif, une forme d'exécution de la présente invention.
La figure 1 est une vue schématique de face d'une matrice comportant une pluralité de diodes laser de type VCSEL que comprend l'appareil de soudage selon l'invention.
La figure 2 est une vue schématique d'un mode de réalisation de l'invention dans lequel l'appareil de soudage comprend une matrice comportant une pluralité de diodes laser.
La figure 3a est une vue schématique en perspective d'un barreau de saphir synthétique que comprend l'appareil de soudage selon l'invention.
La figure 3b est une vue schématique en perspective d'un barreau de verre, ainsi que d'une plaque de saphir synthétique que comprend l'appareil de soudage selon l'invention.
La figure 4a est une vue schématique de face d'une matrice de diodes laser de type VCSEL montée sur un barreau de saphir synthétique utilisé comme moyen de mise en contact de la première membrane thermoplastique sur la deuxième membrane thermoplastique et qui est complété par d'autres moyens de mise en contact sous la forme de ressorts que comprend l'appareil de soudage selon l'invention.
La figure 4b est une vue schématique de côté de la matrice et du barreau représentés à la figure 4a.
La figure 4c est une vue similaire à la figure 4b avec un barreau de saphir synthétique dont l'extrémité inférieure comprend un patin en Téflon®.
La figure 5 est une vue schématique de face d'un ensemble comportant une pluralité de matrices de diodes laser de type VCSEL alignées en une seule rangée, chacune de ces matrices étant montée sur un barreau de saphir synthétique.
La figure 6 est une vue partielle agrandie de l'ensemble représenté à la figure 5 en appui sur deux membranes thermoplastiques à souder.
La figure 7a est une vue schématique d'un mode de réalisation de l'invention dans lequel l'appareil de soudage est équipé d'un système optique comprenant une lentille.
La figure 7b est une vue similaire à la figure 7a dans lequel l'appareil de soudage est de plus équipé d'une plaque de saphir synthétique.
La figure 8a est une vue schématique du mode de réalisation de l'invention représenté à la figure 7b dans lequel l'appareil de soudage comprend en outre deux miroirs.
La figure 8b est une vue schématique de côté du mode de réalisation représenté à la figure 8a.
La figure 9 est une vue schématique de côté d'un appareil de soudage selon l'invention réalisé sous la forme d'un chariot.
La figure 10 est une vue schématique de l'arrière du chariot représenté à la figure 9.

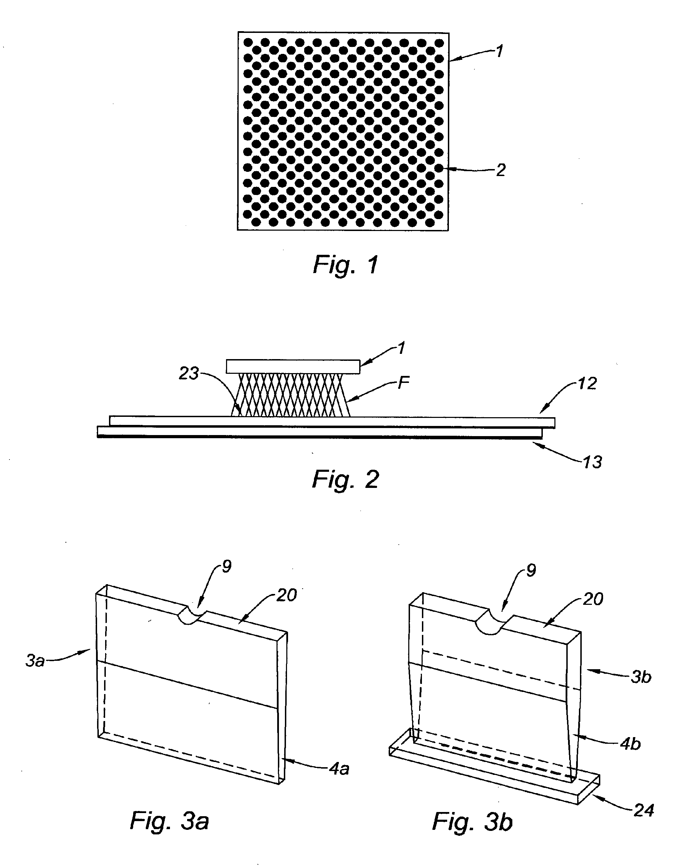

La figure 1 est une vue schématique de face d'une matrice 1 comportant une pluralité de diodes laser 2 de type VCSEL que comprend l'appareil de soudage 21 selon l'invention. Les diodes laser 2 sont disposées en quinconce à la surface de la matrice 1 de manière très dense, à savoir de l'ordre de plusieurs centaines de diodes par millimètre carré. La matrice 1 a une surface carrée. Dans d'autres modes de réalisation de l'invention, la matrice 1 peut par exemple avoir une surface rectangulaire.

Les diodes laser de type VCSEL présentent l'avantage de pouvoir être fabriquées sous la forme d'une matrice ou d'une pluralité de matrices avec une très grande densité telle qu'évoquée ci-dessus. En effet, chaque diode laser de type VCSEL émet sur une surface réduite et parallèlement aux autres diodes de type VCSEL. Grâce à une matrice ou à une pluralité de matrices de diodes laser de type VCSEL, des éclairements de plusieurs kW/cm² peuvent être obtenus qui sont tout à fait comparables aux éclairements obtenus avec des diodes laser dites « conventionnelles » et avec les avantages techniques suivants :
- une capacité à travailler à des températures plus élevées, à savoir jusqu'à une température de jonction de 100°C, et ce sans risque de détérioration, et surtout
- un faisceau optique circulaire d'excellente qualité, à savoir monomode et peu divergent (angle de 10° maximum par rapport à la normale à la surface d'émission).

De plus, la somme de tous les faisceaux issus de ces diodes laser 2 de type VCSEL procure un éclairement tout à fait uniforme à quelques millimètres de la surface émettrice. La satisfaction à ce critère d'uniformité est fondamentale dans le cadre de la présente invention. En effet, les matériaux thermoplastiques dont sont constituées les première et deuxième membranes thermoplastiques 12,13 à souder sont de mauvais conducteurs de la chaleur. Il est donc primordial que l'élévation de la température jusqu'au ramollissement de ces matériaux soit à chaque instant la même en tout point de la surface à souder desdites membranes thermoplastiques.

Avec une pluralité de matrices 1 de diodes laser 2 de type VCSEL alignées en une rangée, il est possible de générer un faisceau laser F (ou autrement dit une « ligne ») de plusieurs centimètres de long sur quelques millimètres de large à une distance de la surface émettrice inférieure à 100 mm. Cela permet de dimensionner l'appareil de soudage 21 de manière tout à fait compacte.

Dans un mode de réalisation de l'invention, les diodes laser 2 de type VCSEL émettent par le bas, ce qui permet de les refroidir passivement, et donc de s'affranchir d'un refroidissement par circulation d'eau. Leur rendement énergétique, à savoir le rapport de la puissance optique émise sur la puissance électrique fournie, est aujourd'hui de l'ordre de 50% et les développements en cours permettront bientôt de dépasser les 60%.

L'ensemble des matrices 1 de diodes laser 2 de type VCSEL peut être alimenté par une batterie de 6 volts ou 12 volts capable d'assurer le fonctionnement à plein régime de toutes les diodes laser 2 pendant au moins 4 heures. Ainsi, cela procure l'avantage à l'appareil de soudage 21 de ne pas avoir de liaison filaire, ce qui en facilite grandement son utilisation, et en particulier dans les endroits souvent peu accessibles où l'on pose des membranes thermoplastiques.

La figure 3a est une vue schématique en perspective d'un barreau de saphir synthétique 3a de forme parallélépipédique avec une extrémité inférieure 4a biseautée que comprend l'appareil de soudage 21.

Du fait de leur angle d'incidence et de la différence des indices de réfraction de l'air et du barreau de saphir synthétique 3a, les faisceaux émis par les diodes laser 2 se réfléchissent sur ses parois et se recouvrent pour former un éclairement uniforme en sortie dudit barreau de saphir synthétique 3a, c'est-à-dire au contact direct de la première membrane thermoplastique 12.

Le barreau de saphir synthétique 3a représenté à la figure 3a remplit pour fonction notamment celle de guide d'onde de l'appareil de soudage 21. Il comprend une extrémité inférieure 4a et une encoche 9 de forme particulière sur la face d'entrée 20. Cette encoche 9 constitue un dioptre dit de type « mouse bite ». Le profil de cette encoche 9 est optimisé pour étaler la puissance optique de manière uniforme dans le sens de la longueur à la sortie dudit barreau de saphir synthétique 3a, ce qui permet de réduire la hauteur de ce dernier et ainsi de disposer d'un appareil de soudage 21 très compact tout en générant une « ligne » ou un faisceau laser F plus long.

Le barreau de saphir synthétique 3a a subi un traitement antireflet sur la face d'entrée 20 et sur la face en contact avec la première membrane thermoplastique 12, ce qui permet d'obtenir un taux de transmission proche de 100% entre 800 et 1200 nanomètres.

D'autre part, le coefficient de conductivité thermique λ du saphir synthétique est de 40 W/m.K à 20°C (valeur 100 fois supérieure à celle des membranes thermoplastiques). C'est pourquoi, le barreau de saphir synthétique 3a est aussi un moyen de drainage calorique destiné à éviter la dégradation par chaleur de la surface d'éclairement 23 de la première membrane thermoplastique 12 de l'appareil de soudage 21.

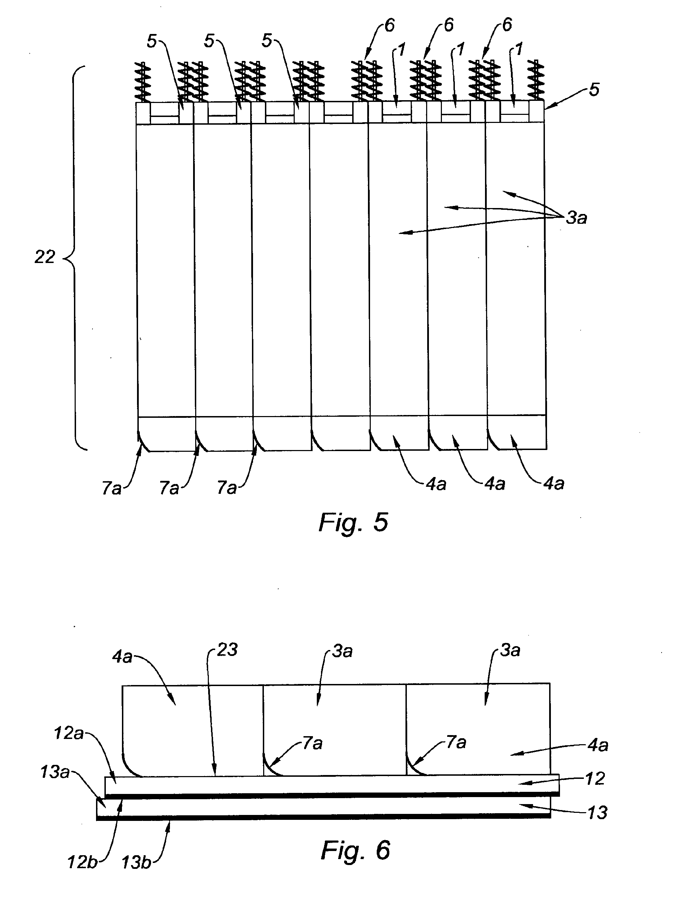

Aussi, comme cela est représenté à la figure 6, le barreau de saphir synthétique 3a est un moyen de mise en contact de la première membrane thermoplastique 12 sur la deuxième membrane thermoplastique 13. En effet, de par la pression qu'il exerce sur la première membrane thermoplastique 12, il garantit la conduction thermique entre ladite première membrane thermoplastique 12 et la deuxième membrane thermoplastique 13.

L'appareil de soudage 21 selon l'invention peut comprendre un barreau de verre 3b et une plaque de saphir synthétique 24 tels qu'ils sont représentés à la figure 3b. Le barreau de verre 3b comprend une extrémité inférieure 4b. Dans un tel mode de réalisation de l'invention, la plaque de saphir synthétique 24 remplit les fonctions de moyen de drainage calorique et de moyen de mise en contact de la première membrane thermoplastique 12 sur la deuxième membrane thermoplastique 13 et le barreau de verre 3b remplit la fonction de guide d'onde.

Dans un autre mode de réalisation de l'invention non représenté, l'appareil de soudage 21 peut comprendre un barreau de diamant synthétique du type CVD (Chemical Vapor Deposition) qui offre une transparence équivalente à celle du saphir synthétique mais avec un coefficient de conductivité thermique λ supérieur à 1000 W/m.K à 20°C. L'épaisseur maximale actuellement disponible sur le marché d'un tel barreau de diamant synthétique est de 1 mm. Ce diamant synthétique peut aussi, comme la plaque de saphir synthétique 24, remplir les fonctions de moyen de drainage calorique destiné à éviter la dégradation par chaleur de la surface d'éclairement 23 de la première membrane thermoplastique 12 sur la deuxième membrane thermoplastique 13 et de moyen de mise en contact de la première membrane thermoplastique 12 sur la deuxième membrane thermoplastique 13 de l'appareil de soudage 21.

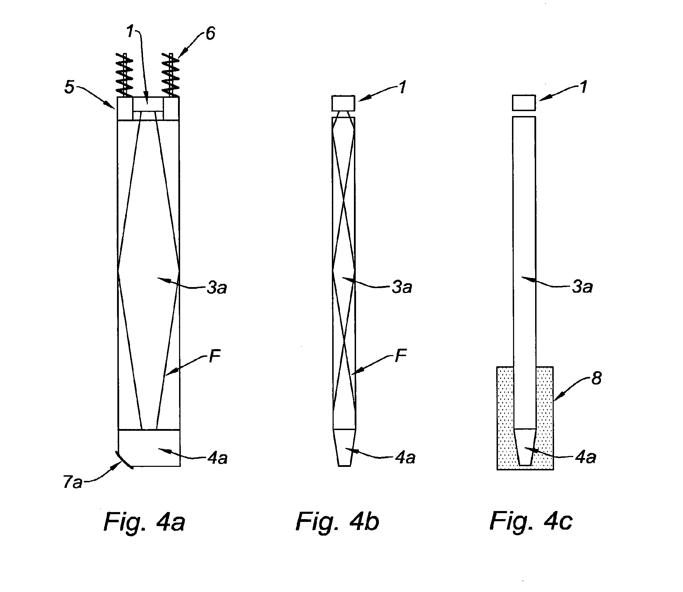

Sur la figure 4a, la matrice 1 est disposée quelques millimètres au dessus d'un barreau de saphir synthétique 3a dont l'extrémité inférieure 4a est biseautée pour réduire la largeur du faisceau laser F. Des supports 5, assurant la liaison entre la matrice 1 et le barreau de saphir synthétique 3a servent d'embase à des ressorts hélicoïdaux 6, qui sont fixés à une partie fixe (non représentée) de l'appareil de soudage 21. Les supports 5 et les ressorts hélicoïdaux 6 sont une forme de réalisation d'un moyen de mise en contact de la première membrane thermoplastique 12 sur la deuxième membrane thermoplastique 13 que comprend l'appareil de soudage 21. D'autres formes de réalisation de tels moyens de mise en contact de la première membrane thermoplastique 12 sur la deuxième membrane thermoplastique 13 sont à la portée de l'homme du métier.

Les ressorts hélicoïdaux 6 ont une raideur telle qu'ils peuvent exercer sur la première membrane thermoplastique 12 une pression suffisante pour assurer son contact sur la deuxième membrane thermoplastique 13. De plus, les ressorts hélicoïdaux 6 assurent le contact permanent du barreau de saphir synthétique 3a sur la première membrane thermoplastique 12 pour pallier les éventuels défauts de planéité du support à étanchéifier, ce qui représente un avantage important de l'appareil de soudage 21.

Tel que représenté à la figure 4a, le barreau de saphir synthétique 3a comporte un arrondi 7a dans le sens de l'avance de l'appareil de soudage 21, ce qui lui permet de ne pas accrocher la première membrane thermoplastique 12 lors du soudage.

Sur la figure 5 est représenté un ensemble 22 qui comporte :
- une pluralité de matrices 1 comportant une pluralité de diodes laser 2 de type VCSEL,
- une pluralité de barreaux de saphir synthétique 3a au-dessus desquels sont disposées lesdites matrices 1,
- une pluralité de supports 5 assurant la liaison entre une matrice 1 et un barreau de saphir synthétique 3a,
- une pluralité de ressorts 6 fixés auxdits supports 5.

Tel que représenté à la figure 5, les matrices 1 et les barreaux de saphir synthétique 3a sont alignés de manière jointive de façon à former au niveau de la zone de contact avec la première membrane thermoplastique 12 une surface quasi continue.

En outre, dans un mode de réalisation de l'invention non représenté, le guide d'onde, par exemple sous la forme d'un barreau de saphir synthétique 3a, peut être d'une longueur telle qu'au dessus de celui-ci sont alignées plusieurs matrices 1 de diodes laser 2. En effet, en fonction de la densité de puissance et de la longueur de la ligne laser souhaitée, les faisceaux de plusieurs matrices 1 peuvent être injectés dans un même guide d'onde et se recouvrir pour former une ligne uniforme en sortie dudit moyen. Cependant, ce mode de réalisation ne convient que lorsque le support à étanchéifier est parfaitement plan.

La figure 6 représente de manière schématique les barreaux de saphir synthétique 3a représentés à la figure 5 en appui sur la première membrane thermoplastique 12 à l'endroit où cette première membrane thermoplastique 12 se recouvre avec la deuxième membrane thermoplastique 13.

Tel que représenté sur cette figure 6, la première membrane thermoplastique 12 comprend une couche transparente 12a et une couche absorbante 12b. La couche 12b contient du noir de carbone. La deuxième membrane thermoplastique 13 comprend une couche transparente 13a et une couche absorbante 13b. La couche 13b contient du noir de carbone.

De manière préférée, les première et deuxième membranes thermoplastiques 12,13 comprennent respectivement deux couches de matières thermoplastiques, à savoir :
- une couche transparente 12a,13a, c'est-à-dire non chargée et donc transparente au rayonnement des diodes laser 2 que comprend l'appareil de soudage 21, et
- une couche absorbante 12b,13b, d'environ 50 microns d'épaisseur, qui contient au moins 0,5 % de noir de carbone.

De tels matériaux bicouches sont couramment produits :
- par extrusion soufflage dans le cas du PEHD, et
- par calandrage dans le cas du PVC.

Leur prix est identique à celui des matériaux monocouches contenant du noir de carbone.

La vitesse de soudage de l'appareil de soudage 21 sur de telles membranes thermoplastiques bicouches peut s'élever à 30 mètres par minute.

Cependant, l'appareil de soudage 21 est aussi tout à fait adapté pour souder:
- une première membrane thermoplastique 12 qui comprend une couche transparente 12a et une couche absorbante 12b sur une deuxième membrane thermoplastique 13 monocouche transparente,
- une première membrane thermoplastique 12 qui comprend une couche transparente 12a et une couche absorbante 12 b sur une deuxième membrane thermoplastique 13 monocouche absorbante.
- une première membrane thermoplastique 12 monocouche transparente sur une deuxième membrane thermoplastique 13 monocouche absorbante.

De plus, dans le cadre de la présente invention, les matériaux thermoplastiques dont sont constituées les première et deuxième membranes thermoplastiques 12,13 sont avantageusement choisis parmi le PVC, le PEHD, et le PP.

Comme représenté à la figure 6, les extrémités inférieures 4a des barreaux de saphir synthétique 3a sont en appui sur la couche transparente 12a de la première membrane thermoplastique 12. Le faisceau laser F guidé par les barreaux de saphir synthétique 3a forme un éclairement uniforme, direct, et simultané de la surface d'éclairement 23 de la première membrane thermoplastique 12, qui traverse la couche transparente 12a sans être absorbé. La couche absorbante 12b voit alors sa température s'élever très rapidement du fait de la conversion en chaleur de l'énergie électromagnétique du faisceau laser F qui a traversé ladite couche transparente 12a. Cette conversion en chaleur est obtenue par la mise en vibration (à savoir la mise en oeuvre d'un phénomène de résonance) des molécules de noir de carbone présentes dans ladite couche absorbante 12b. La chaleur ainsi dégagée se propage par conduction thermique à la couche transparente 13a de la deuxième membrane thermoplastique 13 sur laquelle se recouvre la première membrane thermoplastique 12. Cette couche transparente 13a commence aussi à ramollir, voire à fondre dans le cas d'un polymère semi-cristallin.

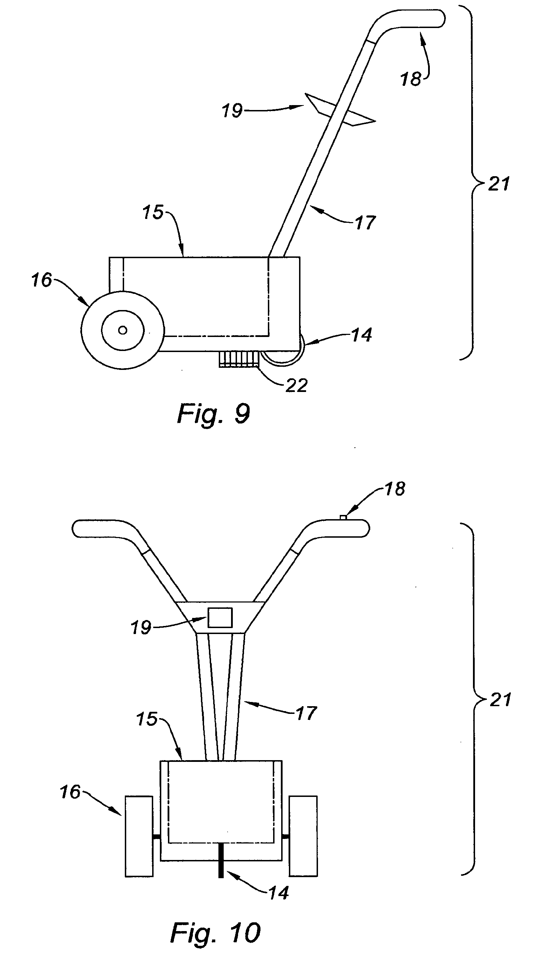

Le flux thermique se propage également dans la couche transparente 12a, mais le barreau de saphir synthétique 3a qui est un bon conducteur thermique du fait de son coefficient de conductivité thermique λ suffisamment élevé, absorbe les calories au voisinage de la surface de la couche 12a et empêche ainsi la dégradation par chaleur de la surface d'éclairement. Il en résulte que le soudage des première et deuxième membranes thermoplastiques 12,13 obtenu est de qualité, puisque c'est sur cette couche 12a que s'effectue la pression d'écrasement, notamment au moyen de la roue presseuse 14 telle que représentée aux figures 9 et 10. Ce qui constitue un aspect fondamental de la présente invention.

Plus précisément, la roue presseuse 14, par la pression élevée qu'elle exerce, force l'interpénétration des macromolécules qui composent respectivement la première et la deuxième membranes thermoplastiques 12,13, lesdites macromolécules étant devenues mobiles sous l'effet de la chaleur générée par l'éclairement direct, simultané et uniforme de la surface d'éclairement 23 de ladite première membrane thermoplastique 12.

Après refroidissement, on obtient une soudure aussi résistante que le matériau dont sont constituées les première et deuxième membranes thermoplastiques 12,13.

De plus, de par le fait que la dégradation par chaleur de la surface d'éclairement 23 est évitée, il en résulte qu'il n'y a pas de risque d'encrassement de la surface du barreau de saphir synthétique 3a ni de la roue presseuse 14. Ainsi, la présente invention propose un appareil de soudage 21 d'une première membrane thermoplastique 12 sur une deuxième membrane thermoplastique 13 qui ne se heurte pas à des problèmes d'encrassement lors du soudage.

Comme expliqué pour la figure 4a, grâce aux ressorts 6, l'appareil de soudage 21 est parfaitement en mesure de s'adapter aux irrégularités de la surface du support à étanchéifier et la première membrane thermoplastique 12 qui reçoit le rayonnement est toujours maintenue en pression sur la deuxième membrane thermoplastique 13, tout en évitant la dégradation par chaleur de la surface de la couche transparente 12a grâce au barreau de saphir synthétique 3a.

La figure 4c illustre un autre mode de réalisation de l'invention, lorsqu'il s'agit de souder deux membranes thermoplastiques 12,13 sous la forme de membranes thermoplastiques monocouches absorbantes. Pour ce faire, dans le mode de réalisation de l'invention illustré à cette figure 4c, un patin en Téflon® 8, par exemple d'une épaisseur de 1 mm, est disposé à l'extrémité inférieure 4a du barreau de saphir synthétique 3a. Ainsi, le patin en Téflon® 8 est un moyen destiné à propager la chaleur produite dans la première membrane thermoplastique 12 vers la deuxième membrane thermoplastique 13.

En effet, dans le cas particulier de membranes thermoplastiques en PEHD ou en PP exposées en permanence à la lumière solaire, un matériau bicouche tel que décrit ci-dessus n'est pas envisageable, car la faible tenue aux ultra-violets du PP et dans une moindre mesure du PEHD non chargés peut occasionner des craquelures et des fissurations de la couche transparente. C'est pourquoi, il est nécessaire d'utiliser des membranes thermoplastiques absorbantes monocouche qui contiennent une charge absorbante (par exemple du noir de carbone) lorsque lesdites membranes thermoplastiques sont exposées aux ultra-violets.

Le patin en Téflon® 8 se comporte alors comme une couche transparente au faisceau laser F, qui transmet presque toute l'énergie électromagnétique à la première membrane thermoplastique 12 monocouche absorbante. Le barreau de saphir synthétique 3a refroidit le patin en Téflon ® 8. Le Téflon® aussi mauvais conducteur de la chaleur que la première membrane thermoplastique 12, n'absorbe qu'une partie de la chaleur produite dans cette première membrane thermoplastique 12 et lui permet ainsi de se propager vers le bas à la deuxième membrane thermoplastique 13 sur laquelle elle s'appuie.

Jusqu'à une certaine limite le Téflon® empêche par son contact une dégradation thermique de la surface de la première membrane thermoplastique 12 par l'oxygène de l'air.

Dans ce mode de réalisation de l'invention, l'épaisseur de la première et de la deuxième membranes thermoplastiques 12, 13 est limitée à 300 microns, étant donné que la chaleur se propage difficilement dans des membranes thermoplastiques 12,13, et la vitesse de soudage est nettement moins élevée qu'avec un matériau bicouche transparent/absorbant, mais elle peut être supérieure à 10 mètres par minute.

Il est à noter que le patin en Téflon® 8 représente un moyen envisageable que peut comprendre l'appareil de soudage 21 pour effectuer le soudage de membranes thermoplastiques monocouches absorbantes, à savoir qui comprennent une charge absorbante telle que du noir de carbone. D'autres moyens équivalents au patin en Téflon® 8 sont à la portée de l'homme du métier.

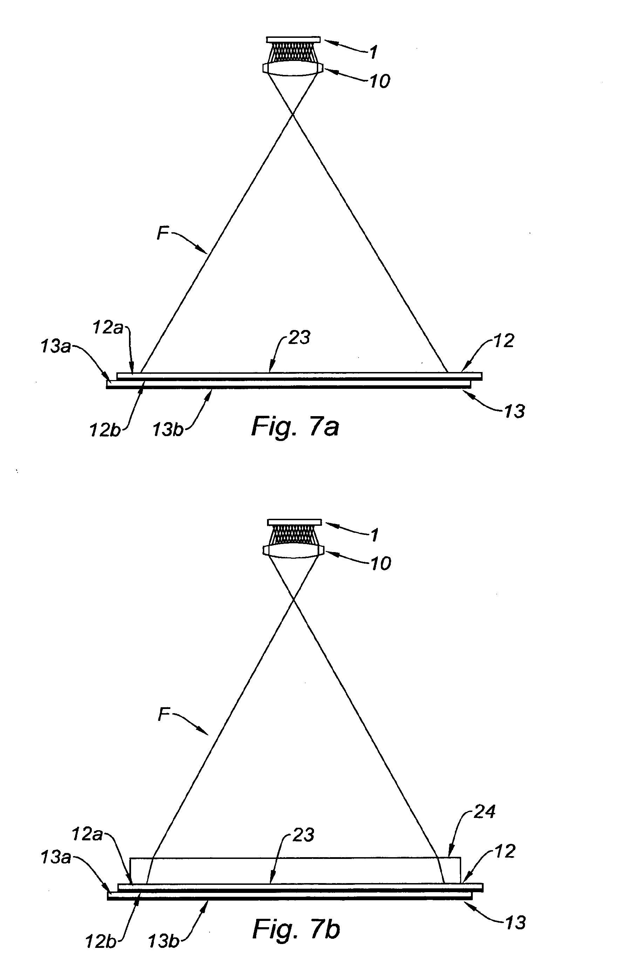

La figure 7a représente un mode de réalisation de l'invention, dans lequel une lentille 10 de focale adaptée est disposée en face de la matrice 1 comportant une pluralité de diodes laser 2 de type VCSEL, de sorte que l'éclairement uniforme se trouve dans le plan focal objet et de manière à obtenir un agrandissement suffisant pour étaler la puissance du faisceau laser F dans le plan image.

La lentille 10 utilisée est adaptée au rapport de grandissement que l'on souhaite réaliser entre la source et la zone éclairée. Dans le cas de l'utilisation d'une lentille à symétrie de révolution, on obtiendra un même facteur de forme pour la zone irradiée et la source.

La lentille 10 fait l'image de l'éclairement uniforme obtenu par la pluralité de diodes laser 2 de la matrice 1 sur la surface d'éclairement 23. On laisse le faisceau laser F s'élargir dans la direction du déplacement de l'appareil de soudage 21. La figure 7b représente un mode de réalisation de l'invention assez similaire à celui représenté à la figure 7a, à la différence que l'appareil de soudage comprend en outre une plaque de saphir synthétique 24 qui permet, comme cela a été décrit ci-dessus, d'éviter la dégradation par chaleur de la surface d'éclairement 23 de la première membrane thermoplastique 12, ainsi que d'assurer la mise en contact de la première membrane thermoplastique 12 sur la deuxième membrane thermoplastique 13.

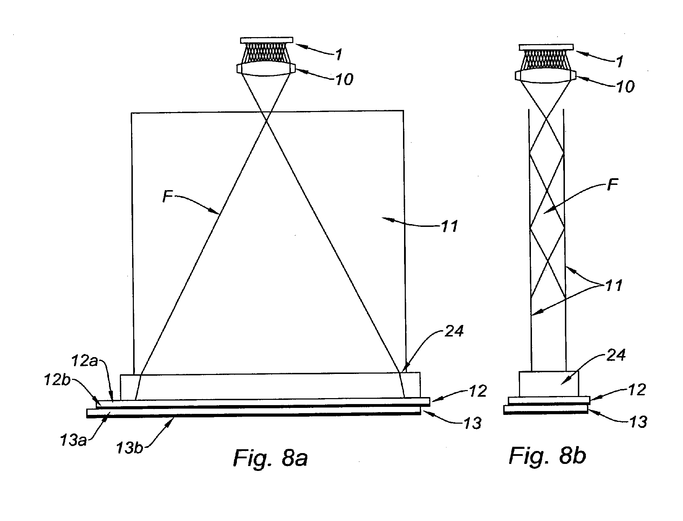

En revanche, et tel que cela est représenté aux figures 8a et 8b, afin de contenir la puissance laser sur une ligne énergétique étroite, ou autrement dit de disposer d'une ligne longue et fine telle que décrite précédemment, on place deux miroirs 11 de part et d'autre du faisceau laser F pour contenir sa puissance optique selon une direction transverse au déplacement de l'appareil de soudage 21 et en le laissant s'étaler dans la direction du sens du déplacement de l'appareil de soudage 21. L'ajustement de la distance entre les deux miroirs 11 peut être réglable pour permettre à l'opérateur d'ajuster la largeur de la soudure à sa convenance. Sous ces miroirs 11 est monté une plaque de saphir synthétique 24 remplissant les fonctions telles que décrites ci-dessus notamment en référence à la figure 7b.

Dans un mode de réalisation de l'invention non représenté, l'appareil de soudage 21 peut être similaire à celui représenté à la figure 8a, sauf qu'il ne comporte pas de plaque de saphir synthétique 24. Alors, dans ce mode de réalisation, les miroirs 11 ont aussi pour fonction d'assurer la mise en contact de la première membrane thermoplastique 12 sur la deuxième membrane thermoplastique 13.

La figure 9 représente une forme de réalisation envisageable de l'appareil de soudage 21 selon l'invention, à savoir sous la forme d'un chariot. Plus précisément, le chariot 21 comporte :
- une batterie électrique 15, dont nous avons déjà évoqué ci-dessus les avantages que cela représentait pour l'utilisation aisée de cet appareil de soudage 21,
- un essieu avant muni de roues avec des pneus 16,
- un guidon 17,
- une poignée munie d'un bouton poussoir 18, et
- un dispositif de réglage et de mémorisation de la puissance de soudage 19.

En effet, l'appareil de soudage 21 peut être équipé d'un dispositif de réglage de la puissance rayonnée de façon à optimiser la vitesse de soudage en fonction des caractéristiques des membranes thermoplastiques à souder.

Préférentiellement, l'appareil de soudage 21 fonctionne en mode digital afin de permettre la mémorisation de plusieurs réglages.

Une roue presseuse 14 est montée à l'arrière du chariot 21, dans l'alignement de son axe longitudinal de manière à constituer un autre point d'appui dudit chariot 21. Avantageusement, cette roue presseuse 14 est caoutchoutée. De plus, cette roue presseuse 14 est montée juste à l'arrière et dans son alignement de l'ensemble 22 (tel que représenté à la figure 5), ledit ensemble 22 étant également placé selon l'axe longitudinal du chariot 21.

De cette manière, la roue presseuse 14 caoutchoutée en roulant sans glissement exerce une forte pression sur les zones irradiées par le faisceau laser F qui sont dans un état fluide ou pâteux dans et au voisinage immédiat de la couche absorbante 12b. Cela permet alors l'enchevêtrement (ou autrement dit l'interpénétration) des macromolécules entre la couche absorbante 12b et la couche transparente 13a, et ce tel que cela a été déjà évoqué ci-dessus.

De manière préférée, la largeur du patin de la roue presseuse 14 correspond au double de la largeur du faisceau laser F pour éviter de laisser une marque en creux. Cette largeur reste inférieure ou égale à 10 mm. Cette faible largeur et la compressibilité du caoutchouc dont est avantageusement constituée ladite roue presseuse 14 permettent de sécuriser l'étanchéité de la soudure sur un sol irrégulier, ce qui ne peut être réalisé avec un galet indéformable en métal de 50 mm de large que l'on utilise dans les appareils de soudage de l'état de la technique décrits ci-avant.

De manière préférée, la roue presseuse 14 est également montée sur une suspension à ressorts.

La figure 10 représente de manière schématique le chariot 21 représenté à la figure 9 mais vu de l'arrière. Le poids de la batterie 15 est réparti de façon équivalente sur la roue presseuse 14 et les roues 16. L'utilisateur pousse ainsi le chariot 21 sans le soulever au moyen du guidon 17 et en exerçant en permanence une pression sur l'interrupteur monté sur la poignée 18. De manière avantageuse, un signal sonore faible mais continu informe l'utilisateur que l'appareil de soudage 21 est en marche. S'il relâche sa pression sur la poignée 18 l'alimentation électrique est coupée. Un interrupteur marche/arrêt intégré au boîtier de réglage 19 apporte une sécurité supplémentaire.

Au besoin, une lumière, par exemple rouge, peut être injectée dans les guides d'ondes pour signaler un danger de brûlure.

La puissance totale émise est limitée à 300 watts pour permettre une vitesse de soudage de 30 mètres par minute soit 1,8 km/h, ce qui veut dire que la consommation maximale de l'appareil de soudage 21 est de 600 watts.

De plus, dans un mode de réalisation de l'invention non représenté, l'appareil de soudage 21 comprend un capteur de déplacement, éventuellement optique. Cela permet d'ajuster automatiquement et de manière instantanée l'intensité du courant alimentant les diodes laser 2, ce qui garantit sur la première membrane thermoplastique 12 un éclairement exprimé en Watts par millimètres carrés constant et optimisé quelles que soient les variations de la vitesse de déplacement de l'appareil de soudage 21.

Par ailleurs, l'appareil de soudage 21 peut être muni d'au moins deux lignes laser. Il est alors possible de réaliser en continu ou de manière séquentielle deux lignes de soudure parallèles, ce qui garantit une étanchéité parfaite de l'ouvrage.

Dans un autre mode de réalisation de l'invention non représenté, il est possible de monter les matrices 1 comportant une pluralité de diodes laser 2 avec les guides d'onde et le moyen de mise en contact et de drainage calorique dans un carter en plastique et de les relier par un câble à une batterie 15. Cela permet ainsi de confectionner plus rapidement et avec plus de souplesse que les outils actuels des bâches de camion, des bâches publicitaires, des toiles de tente, des couvertures de piscine.

Dans un mode de réalisation non représenté, l'appareil de soudage 21 peut également être un appareil à main qui comprend au moins un ensemble 22 tel que représenté à la figure 5 ainsi qu'une roue presseuse 14. Ce type d'appareil est particulièrement adapté au soudage des membranes thermoplastiques destinées à assurer l'étanchéité dans les tunnels ou sur les dalles des habitations

Par ailleurs, dans un mode de réalisation de l'invention non représenté, l'appareil de soudage 21 peut être un appareil ne se déplaçant pas lors de son fonctionnement, mais sous lequel défilent les première et deuxième membranes thermoplastiques 12,13 (par exemple au moyen d'un tapis roulant), ledit appareil de soudage 21 étant conçu de manière à souder ces première et deuxième membranes thermoplastiques 12,13 au niveau de leurs zones de recouvrement.

Les membranes thermoplastiques à souder peuvent également être des surfaces de petites dimensions, telle que la fine membrane interne d'un téléphone portable par exemple, la coque plastique de l'appareil se comportant comme la deuxième membrane.

La présente invention procure aussi les avantages suivants :
- L'appareil de soudage 21, de par sa faible consommation d'énergie, peut être alimenté par une ou plusieurs batteries qui pourront être rechargées pendant la nuit.
- La vitesse de soudage élevée, de l'ordre de 30 mètres par minute de l'appareil de soudage 21 permet de réaliser en une seule journée des travaux d'étanchéité actuellement réalisables en une semaine au moyen d'appareils de soudage connus.
- De plus, à la différence des appareils de soudage connus, l'appareil de soudage 21 introduit la chaleur par l'extérieur et non pas entre les première et deuxième membranes thermoplastiques 12,13, et ce tout en préservant la surface d'éclairement 23 de la première membrane thermoplastique 12 en contact avec l'appareil de soudage 21. Il est donc possible à tout moment de retoucher une ligne de soudure en repassant tout simplement sur l'endroit présentant un défaut.
- L'appareil de soudage 21 présente une certaine longévité avec des diodes laser de type VCSEL.

Enfin, il est à noter que l'appareil de soudage 21 selon l'invention peut être utilisé dans de multiples applications industrielles, parmi lesquelles figurent notamment celles des chantiers où l'on dépose des géo-membranes ou des nappes d'étanchéité en matière plastique.

## Revendications

1. Appareil de soudage (21) d'une première membrane thermoplastique (12) sur une deuxième membrane thermoplastique (13), au moins la première membrane thermoplastique (12) ou la deuxième membrane thermoplastique (13) étant absorbante **caractérisé en ce que** ledit appareil de soudage (21) comprend au moins une matrice (1) comportant une pluralité de diodes laser de type VCSEL (2) dont la somme de tous les faisceaux procure un éclairement uniforme à quelques millimètres de la surface émettrice et forme sur la surface d'éclairement (23) de la dite première membrane thermoplastique (12) un éclairement direct, c'est-à-dire non guidé par une fibre optique, simultané et uniforme.

2. Appareil de soudage (21) selon la revendication 1 **caractérisé en ce que** ledit appareil de soudage (21) comprend en outre au moins un guide d'onde (3a,3b).

3. Appareil de soudage (21) selon la revendication 1 ou la revendication 2 **caractérisé en ce que** ledit appareil de soudage (21) comprend en outre au moins un moyen de mise en contact (3a,4a,5,6,8,11,24) de la première membrane thermoplastique (12) sur la deuxième membrane thermoplastique (13).

4. Appareil de soudage (21) selon l'une quelconque des revendications précédentes **caractérisé en ce que** ledit appareil de soudage (21) comprend en outre au moins un moyen (3a,4a,24) de drainage calorique destiné à éviter la dégradation par chaleur de la surface d'éclairement (23) de la première membrane thermoplastique (12).

5. Appareil de soudage (21) selon l'une quelconque des revendications 1 à 4 **caractérisé en ce que** ledit appareil de soudage (21) comprend une pluralité de guides d'onde (3a,3b) et une pluralité de matrices (1) agencés de manière à ce qu'au moins un desdits guides d'onde (3a,3b) guide au moins un desdits faisceaux laser (F) émis par la pluralité des diodes laser (2) de ladite pluralité de matrices (1).

6. Appareil de soudage (21) selon la revendication 5 **caractérisé en ce que** chaque guide d'onde (3a,3b) guide un faisceau laser (F) émis par la pluralité des diodes laser (2) d'une matrice (1) correspondante.

7. Appareil de soudage (21) selon l'une quelconque des revendications 4 à 6 **caractérisé en ce que** le moyen (3a,24) de drainage calorique est intercalé entre le faisceau laser (F) et la première membrane thermoplastique (12) et a un coefficient de conductivité thermique supérieur à 30 W/m.K à 20°C.

8. Appareil de soudage (21) selon l'une quelconque des revendications précédentes, **caractérisé en ce que** ledit appareil de soudage (21) comprend au moins un barreau de saphir synthétique (3a) ou de diamant synthétique.

9. Appareil de soudage (21) selon l'une quelconque des revendications 3 à 8 **caractérisé en ce que** l'appareil de soudage (21) comprend au moins un moyen de mise en contact de la première membrane thermoplastique (12) sur la deuxième membrane thermoplastique (13) qui comporte des éléments de déformation élastique (6).

10. Appareil de soudage (21) selon l'une quelconque des revendications précédentes **caractérisé en ce que** la puissance émise par le faisceau laser (F) est fonction de la vitesse de soudage de l'appareil de soudage (21).

11. Appareil de soudage (21) selon l'une quelconque des revendications précédentes **caractérisé en ce que** ledit appareil de soudage (21) comprend en outre au moins un système optique (10) conçu de façon à ce que l'éclairement direct, simultané et uniforme formé par le faisceau laser (F) émis par la pluralité de diodes laser (2) se trouve dans le plan focal objet de manière à obtenir un agrandissement pour étaler la puissance du faisceau laser (F) dans le plan image.

12. Appareil de soudage (21) selon la revendication 11, **caractérisé en ce que** ledit système optique (10) comprend en outre au moins deux miroirs (11) disposés de part et d'autre du faisceau laser (F) de manière à contenir sa puissance optique selon une direction transverse au déplacement de l'appareil de soudage (21) et à l'étaler dans la direction du sens de déplacement dudit appareil de soudage (21).

13. Appareil de soudage (21) selon la revendication 12 caractérisé en que lesdits au moins deux miroirs (11) ont un écartement réglable.

14. Appareil de soudage (21) selon l'une quelconque des revendications précédentes **caractérisé en ce que** ledit appareil de soudage (21) comprend des moyens de déplacement lui permettant d'être déplacé pendant le soudage.

## Patentansprüche

1. Eine Schweißvorrichtung (21) zum schweißen eine erste thermoplastiche Membrane (12) auf eine zweite thermoplastiche Membrane (13), wobei mindestens die erste thermoplastische Membrane (12) oder die zweite thermoplastische Membrane (13) absorbierend ist, **dadurch gekennzeichnet, dass** diese Schweißvorrichtung (21) mindestens eine Matrix (1) mit einer Vielzahl von Diodenlasern der VCSEL-Typs (2) umfaßt, wobei die Summe aller Bündel eine gleichförmige Beleuchtung zu einigen Millimetern von der emittierenden Oberfläche erzeugt und auf der Beleuchtungsfläche (23) der ersten Membrane (12) eine direkte, also nicht durch eine optische Faser geführt, gleichzeitige und gleichmäßige Beleuchtung bildet.

2. Schweißvorrichtung (21) nach Anspruch 1, **dadurch gekennzeichnet, dass** diese Schweißvorrichtung (21) ferner mindestens einen Wellenleiter (3a,3b) aufweist.

3. Schweißvorrichtung (21) nach Anspruch 1 oder 2, **dadurch gekennzeichnet, dass** diese Schweißvorrichtung (21) ferner mindestens ein Druckmittel (3a,4a,5,6,8,11,24) umfasst um die erste thermoplastische Membrane (12) mit der zweiten thermoplastische Membrane (13) in Berührung zu bringen.

4. Schweißvorrichtung (21) nach einem der vorhergehenden Ansprüche, **dadurch gekennzeichnet, dass** diese Schweißvorrichtung (21) ferner mindestens ein Kühlmittel (3a,4a,24) umfasst um den thermischen Abbau der Beleuchtungsfläche (23) der ersten thermoplastischen Membrane (12) zu vermeiden.

5. Schweißvorrichtung (21) nach einem der Ansprüche 1 bis 4, **dadurch gekennzeichnet, dass** diese Schweißvorrichtung (21) eine Vielzahl von Wellenleitern (3a,3b) und eine Vielzahl von Matrizen(1) umfaßt welche so angeordnet sind dass mindestens einer der Wellenleiter (3a,3b) mindestens einen von dieser Vielzahl von Diodenlasern (2) einer Vielzahl von Matrizen (1) erzeugten Laserstrahl (F) führt.

6. Schweißvorrichtung (21) nach Anspruch 5, **dadurch gekennzeichnet, dass** jeder Wellenleiter (3a,3b) einen von einer Vielzahl von Diodenlaser (2) einer jeweiligen Matrix (1) erzeugten Laserstrahl (F) führt.

7. Schweißvorrichtung (21) nach einem der Ansprüche 4 bis 6, **dadurch gekennzeichnet, dass** das Kühlmittel (3a,24) zwischen dem Laserstrahl (F) und der ersten thermoplastischen Membrane (12) eingefügt ist und einen Wärmeleitfähigkeitskoeffizienten größer als 30 W/m.K bei 20°C hat.

8. Schweißvorrichtung (21) nach einem der vorhergehenden Ansprüche, **dadurch gekennzeichnet, dass** diese Schweißvorrichtung (21) ferner mindestens einen Stab aus synthetischer Saphir (3a) oder aus synthetischer Diamant umfaßt.

9. Schweißvorrichtung (21) nach einem der Ansprüche 3 bis 8, **dadurch gekennzeichnet, dass** diese Schweißvorrichtung (21) ferner mindestens ein Druckmittel umfasst um die erste thermoplastische Membrane (12) mit der zweiten thermoplastische Membrane (13) in Berührung zu bringen, welches elastisch deformierbare Elemente (6) enthält.

10. Schweißvorrichtung (21) nach einem der vorhergehenden Ansprüche, **dadurch gekennzeichnet, dass** die Leistung des Laserstrahls (F) von der Schweißgeschwindigkeit der Schweißvorrichtung (21) abhängig ist.

11. Schweißvorrichtung (21) nach einem der vorhergehenden Ansprüche, **dadurch gekennzeichnet, dass** diese Schweißvorrichtung (21) ferner mindestens ein optisches System (10) welches so ausgebildet ist, dass die direkte, gleichzeitige und gleichförmige Beleuchtung erzeugt von dem Laserstrahl (F) ausgesendet von der Vielzahl von Diodenlasern (2) sich in der objektseitigen Brennebene befindet so dass eine Vergrößerung erhaltet wird um die Leistung des Laserstrahls (F) in die bildseitige Brennebene auszubreiten.

12. Schweißvorrichtung (21) nach Anspruch 11, **dadurch gekennzeichnet, dass** das optische System (10) ferner mindestens zwei Spiegel (11) umfaßt, welche auf jeder Seite des Laserstrahls (F) angeordnet sind um seine optische Leistung in einer Richtung quer zur Bewegung der Schweißvorrichtung (21) zu enthalten und sie in der Richtung der Bewegungsrichtung der Schweißvorrichtung (21) auszubreiten.

13. Schweißvorrichtung (21) nach Anspruch 12, **dadurch gekennzeichnet, dass** die wenigstens zwei Spiegel (11) einen einstellbaren Abstand aufweisen.

14. Schweißvorrichtung (21) nach einem der vorhergehenden Ansprüche, **dadurch gekennzeichnet, dass** diese Schweißvorrichtung (21) eine Bewegungseinrichtung umfasst welche sie erlaubt, sich während des Schweißens zu bewegen.

## Claims

1. A welding device (21) for welding a first thermoplastic membrane (12) onto a second thermoplastic membrane (13), in which at least the first thermoplastic membrane (12) or the second thermoplastic membrane (13) is absorbent, **characterized in that** said welding device (21) comprises at least one die (1) including a plurality of laser diodes of the VCSEL type (2) whose sum of all beams provides a uniform illumination at a few millimetres from the emitting surface and forms on the illuminated surface (23) of said first thermoplastic membrane (12) a direct, which means not guided by an optical fibre, simultaneous and uniform illumination.

2. The welding device (21) according to claim 1, wherein said welding device (21) also comprises at least one waveguide (3a,3b).

3. The welding device (21) according to any one of claims 1 or 2, wherein said welding device (21) also comprises at least one means (3a,4a,5,6,8,11,24) for putting the first thermoplastic membrane (12) in contact with the second thermoplastic membrane (13).

4. The welding device (21) according to any one of the preceding claims, wherein said welding device (21) also comprises at least one heat sinking means (3a,4a,24) for avoiding heat degradation of the illuminated surface (23) of the first thermoplastic membrane (12).

5. The welding device (21) according to any one of claims 1-4, wherein said welding device (21) comprises a plurality of waveguides (3a,3b) and a plurality of dies (1) arranged so that at least one of said waveguides (3a,3b) guides at least one of said laser beams (F) emitted by the plurality of laser diodes (2) of said plurality of dies (1).

6. The welding device (21) according to claim 5, wherein each waveguide (3a,3b) guides a laser beam (F) emitted by the plurality of laser diodes (2) of a corresponding die (1).

7. The welding device (21) according to any one of claims 4-6, wherein the heat sinking means (3a,24) is inserted between the laser beam (F) and the first thermoplastic membrane (12) and has a coefficient of heat transfer greater than 30 W/m. K at 20°C.

8. The welding device (21) according to any one of the preceding claims, wherein said welding device (21) also comprises at least one bar of synthetic sapphire (3a) or synthetic diamond.

9. The welding device (21) according to any one of claims 3-8, wherein the welding device (21) comprises at least one means for putting the first thermoplastic membrane (12) in contact with the second thermoplastic membrane (13) that includes elastic deformation elements (6).

10. The welding device (21) according to any one of the preceding claims, wherein the power emitted by the laser beam (F) depends on the welding speed of the welding device (21).

11. The welding device (21) according to any one of the preceding claims, wherein said welding device (21) also comprises at least one optical system (10) designed so that the direct, simultaneous and uniform illumination formed by the laser beam (F) emitted by the plurality of laser diodes (2) is in the object focal plane so as to obtain a magnification to spread the power of the laser beam (F) in the image plane.

12. The welding device (21) according to claim 11, wherein said optical system (10) also comprises at least two mirrors (11) arranged on either side of the laser beam (F) so as to contain its optical power in a direction transverse to movement of the welding device (21) and spread it in the direction of movement of said welding device (21).

13. The welding device (21) according to claim 12, wherein said at least two mirrors (11) have an adjustable spacing.

14. The welding device (21) according to any one of the preceding claims, wherein said welding device (21) comprises movement means allowing it to be moved during the welding.
